Europäisches Patentamt

European Patent Office

Office européen des brevets

(11) Numéro de publication : **0 389 394 B1**

(12) **FASCICULE DE BREVET EUROPEEN**

(45) Date de publication du fascicule du brevet :
**10.06.92 Bulletin 92/24**

(51) Int. Cl.⁵ : **G01G 13/20, B65G 67/24**

(21) Numéro de dépôt : **90460004.6**

(22) Date de dépôt : **19.01.90**

(54) **Fosse de réception et d'expédition pour produit en vrac, et installation de stockage comprenant une telle fosse.**

(30) Priorité : **24.01.89 FR 8901091**

(43) Date de publication de la demande :
**26.09.90 Bulletin 90/39**

(45) Mention de la délivrance du brevet :
**10.06.92 Bulletin 92/24**

(84) Etats contractants désignés :
**AT BE CH DE ES FR GB GR IT LI LU NL SE**

(56) Documents cités :
**EP-A- 0 039 097**
**DE-B- 1 123 982**
**DE-B- 1 223 305**
**FR-A- 1 305 719**
**US-A- 4 151 932**
**AUFBEREITUNGS-TECHNIK. vol. 23, no. 3, mars 1982, WIESBADEN DE pages 149 - 156; W.Diem: "Wiegetechnik und Anlagenbau"**

(73) Titulaire : **Pilard, épouse Briand, Annick, Denise, Gilberte**
**Ville es Jolive**
**F-35360 Montauban De Bretagne (FR)**
Titulaire : **Briand, Gilbert, Raymond**
**Ville es Jolive**
**F-35360 Montauban De Bretagne (FR)**

(72) Inventeur : **Pilard, épouse Briand, Annick, Denise, Gilberte**
**Ville es Jolive**
**F-35360 Montauban De Bretagne (FR)**
Inventeur : **Briand, Gilbert, Raymond**
**Ville es Jolive**
**F-35360 Montauban De Bretagne (FR)**

(74) Mandataire : **Martin, Jean-Jacques et al**
**Cabinet REGIMBEAU 11, rue Franz Heller**
**Centre d'Affaires Patton B.P. 19107**
**F-35019 Rennes Cédex (FR)**

**Description**

La présente invention concerne une fosse de réception et d'expédition pour produit en vrac, et installation de stockage comprenant une telle fosse.

Par produit en vrac on entend des matériaux pulvérulents ou granulaires tels par exemple que des engrais, des granulés alimentaires pour le bétail ou des graines de céréales.

Les coopératives agricoles, ou les négociants en produits de ce genre, possèdent des installations de stockage qui généralement comportent une fosse réceptrice du produit. Dans une installation traditionnelle il est prévu un pont-bascule destiné au pesage des camions de livraison à la fois à leur entrée (avec leur chargement) et à leur sortie (à vide), pour permettre le contrôle des quantités reçues. La fosse réceptrice est équipée de moyens convoyeurs destinés à évacuer le produit qui y est déversé par les camions vers un lieu de stockage. Ce dernier comprend en général une série de cases adjacentes destinées à recevoir chacune une catégorie différente de produit ; les moyens convoyeurs sont par conséquent conçus pour acheminer le produit sélectivement dans la case appropriée.

De plus en plus les utilisateurs du produit ainsi stocké exigent que leur soit livré un mélange bien défini - quant à sa composition et son dosage -, de différents produits stockés dans les cases. C'est le cas en particulier pour les mélanges d'engrais qui doivent être le mieux possible adaptés aux besoins du sol et du type de culture de l'agriculteur utilisateur.

Pour effectuer et distribuer un tel mélange, certaines installations traditionnelles sont donc équipées de différents matériels de pesage, de mélange et de manutention installés hors-sol. Ces matériels comprennent une trémie de pesage mécanique ou électronique (à capteurs de pesée) qu'un opérateur alimente à l'aide d'un chariot automoteur à benne hydraulique. Une fois que les quantités souhaitées de produits ont été déversées dans la trémie, ces produits sont acheminés dans une machine mélangeuse ; le mélange est ensuite repris par un convoyeur qui le transporte soit dans un silo d'expédition, soit directement sur un véhicule - camion ou remorque -.

A la lecture de ce qui précède on comprend aisément qu'une installation de ce type est coûteuse, délicate à exploiter et se prête difficilement à une gestion informatisée des stocks.

On connait par ailleurs, par le document US-A-4 151 932, un dispositif servant à mélanger et à distribuer des produits en vrac. Ce dispositif a la forme d'une tour comportant une trémie mélangeuse et peseuse située au-dessous d'une série de conteneurs qui contiennent des produits différents. La trémie est surélevée, ce qui permet de distribuer le mélange dans des camions passant sous la trémie. Si un dispositif de ce genre peut effectivement être utilisé pour équiper une installation de stockage du genre évoqué plus haut, il ne permet pas d'abaisser sensiblement son coût ni sa facilité d'exploitation, dans la mesure où il ne fait que s'ajouter aux matériels de réception (trémie) et de pesage (pont-bascule) des produits élémentaires arrivant dans l'installation, sans aucunement se substituer à ces matériels.

L'invention au contraire vise à résoudre ces problèmes en proposant une installation peu coûteuse et facile d'utilisation, particulièrement adaptée à une gestion informatisée des stocks.

Ce résultat est atteint grâce au fait que la fosse de réception des produits rentrants (produits élémentaires) sert également à l'expédition des mélanges de produits stockés. A cet effet, la fosse qui fait l'objet de l'invention, dans laquelle est logée une trémie réceptrice disposée sous une grille, est caractérisée en ce que cette trémie est pourvue de moyens de mélange et qu'elle repose sur des capteurs de pesée. Au moyen de la même trémie on réalise donc le contrôle des quantités de produits rentrants, le mélange des produits stockés selon le dosage souhaité, et le contrôle des quantités de produits (notamment des mélanges réalisés) sortants, ceci dans une installation compacte et facile à gérer.

Dans un mode de réalisation préférentiel de l'invention, les moyens de mélange consistent en une vis d'Archimède qui est disposée verticalement selon l'axe de la trémie et est logée dans un tube fixe qui descend jusqu'à la zone de sortie de la trémie, la partie haute de la vis d'Archimède ressortant de ce tube.

Il est avantageusement prévu un - et de préférence plusieurs - déflecteurs annulaires, de section en forme de V inversé, qui sont disposés autour du tube renfermant la vis d'Archimède, et qui favorisent le brassage du produit au cours de l'opération de mélange, ce qui améliore l'homogénéité du produit obtenu.

L'entraînement de la vis d'Archimède en rotation peut être efficacement réalisé à sa partie haute au moyen d'un moteur électrique fixé à l'extérieur de la trémie, via une transmission (par exemple à courroie) qui est logée dans un poutre creuse horizontale montée à l'intérieur de la trémie.

Dans un premier mode de réalisation possible, la grille est supportée par la trémie (et est donc pesée par les capteurs en même temps que cette dernière). Dans ce cas il est possible soit de prévoir le passage sur cette grille des camions de livraison du produit rentrant, soit au contraire d'interdire l'accès de la grille aux camions, par exemple au moyen d'un muret bâti tout autour de la fosse.

Dans un second mode de réalisation possible, la grille est fixe, supportée non pas par la trémie, mais par les parois de la fosse ; dans ce cas seule la trémie est pesée par les capteurs.

L'installation de stockage de produits en vrac comprenant une fosse conforme à celle dont les caractéristiques viennent d'être énoncées, qui fait également partie de l'invention, est caractérisée en ce qu'il est prévu à la sortie de la trémie des moyens convoyeurs adaptés pour transporter le produit sélectivement, soit vers des cases de stockage, soit vers un véhicule récepteur.

Dans un mode de réalisation préférentiel de l'installation, ces moyens de transport comprennent un élévateur vertical d'où le produit peut descendre par gravité par des conduits vers les cases de stockage ou vers le véhicule récepteur.

Dans ce cas, il est avantageusement prévu un conduit additionnel permettant le retour du produit à la fosse.

D'autres caractéristiques et avantages de l'invention apparaîtront de la description et des dessins annexés qui en présentent des modes de réalisation préférentiels.

Sur ces dessins :

La figure 1 est une vue générale schématique de l'installation.

La figure 2 est une vue de face schématique et en coupe d'une fosse selon l'invention.

La figure 2A est une vue de détail à plus grande échelle correspondant au plan de section transversal A-A de la figure 2.

Les figures 3 et 4 représentent, à plus petite échelle, la paroi de la trémie de la figure 2, respectivement vue de dessus et de face.

La figure 5 montre une variante de la fosse de la figure 2.

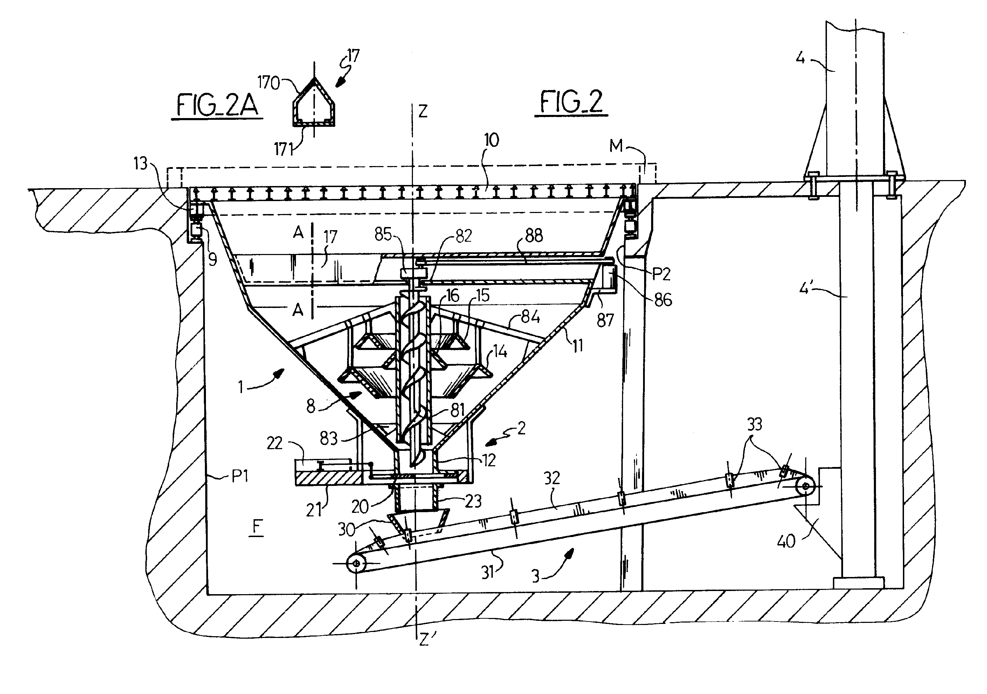

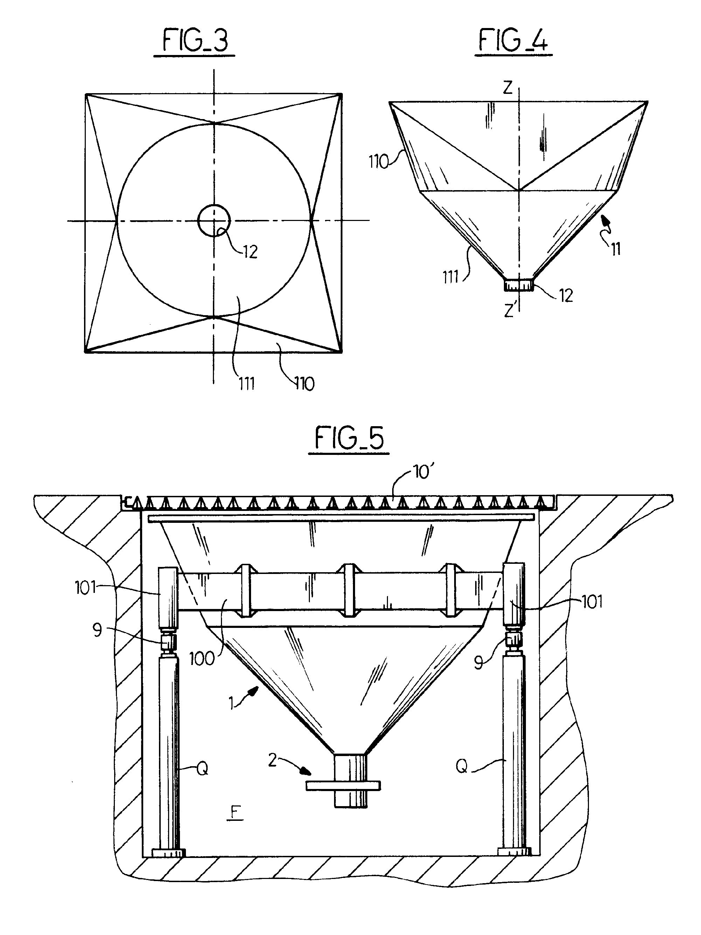

La fosse F de réception et d'expédition pour produit en vrac qui est représentée à la figure 2 est une fosse creusée dans le sol, dans laquelle est logée une trémie 1. Sa paroi 11 est de préférence réalisée en tôle d'acier inoxydable. Comme on le voit plus particulièrement aux figures 3 et 4, son embouchure haute présente un contour carré tandis que sa zone de sortie 12 est circulaire. Elle est constituée de deux parties principales à savoir une partie haute 110 à forte inclinaison (par exemple de l'ordre de 70° par rapport à l'horizontale) et une partie basse 111 moins inclinée (par exemple de 50° par rapport à l'horizontale). La partie haute 110 est composée de tôles planes et de tôles en portion conique qui assurent la transition avec la partie basse 111 qui a une forme tronconique. L'axe vertical de la trémie est référencé ZZ' sur les figures.

Les différentes tôles constitutives de la trémie sont soudées entre elles de manière traditionnelle.

A sa partie haute, la trémie est fixée à une ceinture 13 en forme de cadre de grande rigidité ; sur ce cadre est montée une grille qui est constituée de poutrelles croisées avec des fers plats dont les grandes faces sont disposées verticalement ; il s'agit d'une grille de déchargement classique permettant de supporter des personnes et des engins tels que des camions tout en laissant passer le produit déchargé sur la grille pour qu'il puisse tomber dans la trémie 1.

La ceinture 13 et la grille 10 qu'elle supporte sont encastrées dans une feuillure (renfoncement) formée tout autour de la fosse dans les parois P1, P2 de celle-ci ; les parois de la fosse sont avantageusement en béton.

Selon une caractéristique essentielle de l'invention, cet ensemble repose sur quatre capteurs de pesée 9 qui sont situés à chaque angle de la ceinture 13. Ces capteurs sont des capteurs à compression, auto-stabilisés ou non, par exemple du type disponible dans le commerce sous le nom commercial TRAYVOU avec la référence 4C50A, chaque capteur ayant une capacité maximale de 10 tonnes. Les quatres capteurs fournissent un signal à un circuit de traitement électronique qui de manière connue génère un signal qui est fonction du poids de la trémie (et de ses accessoires) ainsi que de son contenu. A titre d'information, pour une capacité de 35 m³ environ, le poids de l'ensemble grille (vide) - trémie et accessoires sera de l'ordre de huit tonnes.

Selon une autre caractéristique essentielle de l'invention, la trémie est équipée de moyens de mélange référencés 8. Ces moyens comprennent un tube cylindrique 80 ouvert à ses extrémités haute et basse et disposé selon l'axe ZZ' de la trémie. La fixation du tube 8 dans la trémie est réalisée au moyen de pattes de retenue 83, 84 qui sont disposées radialement et situées respectivement à la partie basse et à la partie haute du tube. A l'intérieur du tube 80 est logée et guidée une vis de transport du type vis d'Archimède dont la partie basse arrive dans le manchon 12 de sortie de trémie, tandis que sa partie haute ressort légèrement du tube. Cette partie haute est munie d'une pale de projection radiale 82 fixée à l'extrémité du filet de vis.

A son extrémité haute la vis est retenue et guidée en rotation dans un boîtier réducteur de vitesse 85 lequel est supporté par une poutre creuse horizontale 17 traversant la partie haute de la trémie et fixée à la paroi de cette dernière. La figure 2A montre la forme de la section transversale de la poutre 17. Cette poutre est réalisée en tôle d'acier inoxydable ayant une partie supérieure 170 en forme de V inversé adaptée pour ne pas contrarier la chute du produit dans la trémie ; la poutre creuse est refermée par une plaque de fond 171. A l'extérieur de la trémie est disposé un moteur électrique 86 ; ce dernier est fixé à la paroi de trémie 11 au moyen d'organes de montage appropriés 87, au niveau de la poutre 17 ; à ce niveau la paroi de trémie présente une ouverture qui communique avec l'intérieur de la poutre tubulaire 17. Le moteur 86 entraîne en rotation la vis 81 au moyen d'une courroie 88 qui est disposée à l'intérieur de la poutre 17.

Autour du tube 80 sont montés plusieurs organes de déflection du produit ; dans le mode de réalisation représenté il est prévu un déflecteur annulaire tronconique 16, d'angle au sommet tourné vers le haut, qui est directement fixé par collier sur le tube de manière réglable en hauteur, ainsi que deux déflecteurs annulaires 15, 14 de section en V̲ dirigé vers le haut. Les déflecteurs 14, 15 sont portés par des tiges, de préférence réglables en hauteur, fixées aux pattes 84 de montage du tube. Ces organes 15, 16, 14 sont disposés à peu près en quinconce sur la trajectoire verticale (descendante) du produit dans la trémie de manière à assurer une bonne répartition de celui-ci en améliorant l'homogénéité de leur mélange.

A la partie basse de la trémie est prévue une trappe à guillotine 20 mobile horizontalement et guidée dans un support 21 fixé sous la trémie ; le déplacement de la trappe 20 est commandé par un vérin 22, par exemple un vérin électrique. Sous la trappe est disposé un émotteur à grille 23 dont la fonction est de casser les masses de produit sortant de la trémie dans le cas où ce produit à tendance à s'agglutiner. Il est enfin prévu un sabot de distribution 30 dont le rôle est d'orienter convenablement le produit sur un tapis d'évacuation 3.

L'ensemble des accessoires disposés à la sortie de la trémie, généralement désignés 2, et comprenant la trappe 20 et son support, l'émotteur 23 et le sabot 30 sont suspendus à la trémie et par conséquent leur poids est également pris en compte par les capteurs 9.

Le tapis d'évacuation 3 est un tapis roulant bien connu en soi comprenant une bande souple en caoutchouc 31 guidée et entraînée en rotation sur des rouleaux appropriés ; le brin supérieur de la bande, désigné 32, est progressivement mis en forme au moyen de galets de profilage 33 de manière à présenter une section en forme d'auge convenant au transport d'un produit en vrac. Le tapis 3 transporte le produit qui sort de la trémie de manière continue dans une trémie qui est située à la base d'un élévateur vertical en forme de tour 4. On a désigné par 4′ la partie inférieure de la tour située dans la fosse et par la référence 40 la goulotte de transfert du produit du tapis 3 dans l'élévateur vertical 4′, 4. Ce dernier est un élévateur de type connu, par exemple à godets.

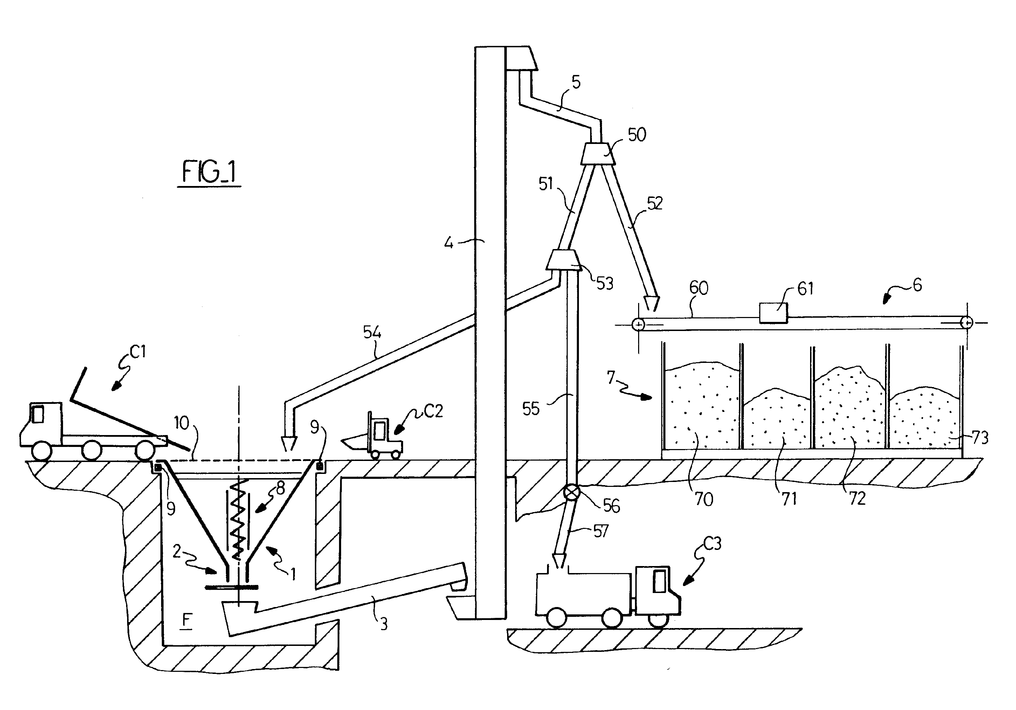

La figure 1 illustre l'organisation générale de l'installation qui utilise une fosse du type qui vient d'être décrit. Le produit arrivant au sommet de l'élévateur 4 redescend automatiquement par gravité dans un tube 5. Ce dernier débouche par l'intermédiaire d'une vanne à deux voies sur deux conduits 51, 52. Le conduit 52 alimente une aire de stockage 7 ; le conduit 51 communique, via une vanne à deux voies 53, avec deux conduits 54, 55. Le conduit 54 est un conduit de retour à la trémie 1. Le conduit 55 est un conduit de descente vers une aire de réception pour véhicules. A cet effet le conduit 55 débouche par l'intermédiaire d'une vanne de fermeture 56 dans une manche orientable 57 pouvant être introduite dans l'ouverture de citerne des camions récepteurs.

L'aire de stockage 7 est composée d'une pluralité de cases juxtaposées 70, 71, 72, 73 qui sont séparées par des cloisons et sont destinées à recevoir chacune un type de produit bien déterminé. L'approvisionnement de ces cases à partir du conduit 52 se fait à l'aide de moyens 6 connus en soi, comprenant un tapis roulant 60 sur lequel est monté un chariot 61 qui porte un autre tapis roulant disposé transversalement et permettant de déverser latéralement le produit à l'intérieur de la case sélectionnée.

Toute l'installation est contrôlée par un opérateur à partir d'une salle de régie à contrôle informatique.

On a désigné par C1 un camion de livraison d'un produit en vrac qui doit être stocké dans l'une des cases de l'aire de stokage 7. Il s'agit d'un camionbenne qui déverse son chargement sur la grille 1. Le produit traverse la grille 10 et descend dans la trémie 1, dont la trappe 20 est fermée. Le produit déversé, contenu dans la trémie, est pesé par les capteurs 9 et une information correspondant au poids du produit est transmis à la régie. La trappe 20 est alors ouverte et les moyens de transport 3, 4 mis en route de sorte que ce produit est acheminé au sommet de l'élévateur 4. Au moyen de la vanne 50, le produit qui descend par gravité par le conduit 5 est aiguillé dans le conduit 52 et déversé sur le tapis roulant 60 après que le chariot 61 ait été positionné en vis-à-vis de la case qui est destinée à recevoir le produit en question.

Quand tout le produit a été déversé dans cette case, les transporteurs sont arrêtés. L'information quant à la quantité et la nature du produit qui vient d'être stocké est introduite dans la mémoire du système informatique de gestion.

Lorsqu'il est nécessaire de préparer un mélange de plusieurs des produits stockés dans les cases 7, un opérateur prélève au moyen d'un chariot à benne hydraulique C2 les quantités souhaitées de chacun des produits dans les cases et les déverse successivement dans la trémie 1. Le dosage se fait de manière simple puisqu'à chaque versement de produit les capteurs enregistre le poids de celui-ci. Un écran de visualisation de ce poids est du reste avantageusement prévu à proximité de la trémie, de manière bien visible pour le conducteur du chariot C2.

Lorsque les différents constituants nécessaires ont été versés dans la trémie (dont la trappe 20 se trouve bien entendu en position fermée) la vis d'Archimède 81 est mise en rotation dans un sens tel que la vis fait remonter le produit dans le tube 80 de sa base vers sa partie haute. A la partie haute, grâce à la pale 82, le produit est éjecté radialement en pluie, ce qui réalise le mélange des différents produits de base. Les déflecteurs 15, 16, 14 qui sont disposés à la manière d'une chicane sur la trajectoire descendante du produit dans la trémie améliorent encore le brassage. Après un temps déterminé de mélange, qui dépend de la nature du produit et de sa quantité, la vis d'Archimède est arrêtée tandis que les moyens de transport 3 et 4 sont mis en route et que la trappe 20 est ouverte.

Le produit (mélange) se trouvant dans la trémie est donc évacué et remonté à la partie haute de l'élévateur 4. Les vannes 50 et 53 sont mises dans des positions telles que le produit descend alors par les conduits 5, 51, 55 et, la vanne 56 étant ouverte, dans la manche 57. Il est ainsi possible de déverser ce produit dans la citerne d'un camion récepteur C3.

Les informations relatives à la quantité de chacun des produits utilisés pour le mélange, qui a quitté l'installation, sont saisies en régie et automatiquement mis en mémoire dans le système de gestion informatique.

On peut remarquer qu'en cas de difficulté il est possible, en modifiant la position de la vanne 53, de retourner le produit à la trémie par le conduit 54. Ceci peut être intéressant en particulier si on se rend compte que la capacité du camion récepteur C3 n'est pas suffisante pour permettre de recueillir tout le produit. Dans ce cas, le surplus de produit est stocké provisoirement dans la trémie, puis peut être acheminé dans une case spéciale prévue dans l'aire de stockage 7 par l'intermédiaire des moyens de transport 3, 4, 5, 52 et 6 (comme s'il s'agissait d'un produit élémentaire).

Il est possible de prévoir que les camions de livraison C1 ne passeront pas sur la grille 10, en particulier si la résistance de cette grille est insuffisante pour en supporter le poids. Dans ce cas l'interdiction d'accès de la grille au camion ou autre engin peut être réalisée de manière très simple grâce à un muret M, représenté en traits interrompus à la figure 2, bâti tout autour de la fosse.

Dans la variante de la figure 5 la grille référencée 10' est encastrée directement dans une feuillure ménagée sur le pourtour de la fosse. Elle est indépendante de la trémie 1. Cette dernière est solidaire d'une armature périphérique 100 qui est munie à chacun de ses angles d'une colonne d'appui 101. Ces dernières reposent sur des capteurs de pesée 9 eux-mêmes supportés par des piliers verticaux Q montés dans la fosse.

Dans la présente variante, la trémie 1 et ses accessoires 2, ainsi que l'armature 100, sont par conséquent supportés par les capteurs de pesée 9 ; par contre la grille 10' ne l'est pas.

Un tel agencement est particulièrement approprié lorsqu'il s'agit de modifier une fosse réceptrice de type traditionnel déjà pourvue de la grille 10'. Pour réaliser une telle modification il suffit de remplacer la trémie existante ou de la modifier en l'équipant des moyens de mélange intérieurs, et de la monter sur des capteurs 9 après avoir érigé dans la fosse des piliers de support Q, par exemple en béton coulé.

Il va de soi que la trémie pourrait être équipée de moyens de mélange autres qu'une vis d'Archimède logée dans un tube, par exemple d'un mélangeur horizontal de type connu en soi.

D'autres types de trappe qu'une trappe à guillotine peuvent naturellement être prévues à la sortie de la trémie.

**Revendications**

1. Fosse de réception et d'expédition pour produit en vrac, dans laquelle est logée une trémie réceptrice (1) disposée sous une grille (10), caractérisée en ce que cette trémie (1) est pourvue de moyens de mélange (8) et qu'elle repose sur des capteurs de pesée (9).

2. Fosse selon la revendication 1, caractérisée en ce que lesdits moyens de mélange (8) consistent en une vis d'Archimède (81) qui est disposée verticalement selon l'axe (ZZ') de la trémie (1) et est logée dans un tube fixe (80) qui descend jusqu'à la zone de sortie (12) de la trémie, la partie haute de la vis d'Archimède (81) ressortant de ce tube (80).

3. Fosse selon la revendication 2, caractérisée en ce que la trémie (1) comporte au moins un déflecteur annulaire (14, 15) de section en forme de V̲ inversé disposé autour du tube (80).

4. Fosse selon l'une des revendications 2 ou 3, caractérisée en ce que la vis d'Archimède (81) est entraînée en rotation à sa partie haute au moyen d'un moteur électrique (86) fixé à l'extérieur de la trémie (1), via une transmission (88) qui est logée dans une poutre creuse horizontale (17) montée à l'intérieur de la trémie (1).

5. Fosse selon l'une des revendications 1 à 4, caractérisée en ce que ladite grille (10) est supportée par la trémie (1).

6. Fosse selon la revendication 5, caractérisée en ce qu'elle comprend un muret (M) disposé tout autour de la fosse pour empêcher l'accès à la grille (10) d'engins tels que des camions ou des chariots.

7. Fosse selon l'une des revendications 1 à 4, caractérisée en ce que ladite grille (10') est fixe, indépendante de la trémie (1).

8. Installation de stockage de produit en vrac, qui comprend une fosse conforme à l'une des revendications 1 à 7, caractérisée en ce qu'il est prévu à la sortie de la trémie (1) des moyens convoyeurs (3 ; 4 ; 5 ; 52-60-61, 51-55-57) adaptés pour transporter le produit sélectivement, soit vers des cases de stockage (7), soit vers un véhicule récepteur (C3).

9. Installation selon la revendication 8, caractérisée en ce que lesdits moyens de transport comprennent un élévateur vertical (4) d'où le produit peut descendre par gravité par des conduits (52, 52-55-57) vers les cases de stockage (7) ou vers le véhicule récepteur (C3).

10. Installation selon la revendication 9, caractérisée en ce qu'il est prévu un conduit additionnel (54) de retour du produit à la fosse.

**Patentansprüche**

1. Schüttgutempfangs- und Auslieferungsgrube, in der ein Empfangsbunker (1) unter einem Gitter (10) angeordnet ist, dadurch gekennzeichnet, daß dieser Bunker (1) mit Mischvorrichtungen (8) versehen ist und daß er auf Wiegesensoren (9) ruht.

2. Grube nach Anspruch 1, dadurch gekennzeichnet, daß die Mischvorrichtungen (8) aus einer archimedischen Schraube (81) bestehen, die vertikal entlang einer Achse (ZZ') des Bunkers (1) angeordnet ist und in einem festen Rohr (80) angeordnet ist, das bis zum Ausgangsbereich (12) der Grube fällt, wobei der obere Teil der archimedischen Schraube (81) aus diesem Rohr (80) herausragt.

3. Grube nach Anspruch 2, dadurch gekennzeichnet, daß der Bunker (1) wenigstens eine ringförmige Ablenkung (14, 15) mit einem Querschnitt in umgekehrter V-Form aufweist, der um dieses Rohr (80) herum angeordnet ist.

4. Grube nach einem der Ansprüche 2 oder 3, dadurch gekennzeichnet, daß die archimedische Schraube in ihrem oberen Teil mittels eines Elektromotors (86), der an der Außenseite des Bunkers (1) befestigt ist, über eine Kraftübertragung, die in einem horizontalen, hohlen Träger (17), der im Innern des Bunkers (1) befestigt ist, in Drehung versetzt wird.

5. Grube nach einem der Ansprüche 1 bis 4, dadurch gekennzeichnet, daß das Gitter (10) von dem Bunker (1) getragen wird.

6. Grube nach Anspruch 5, dadurch gekennzeichnet, daß sie eine Mauer (M) umfaßt, die um die Grube angeordnet ist, um den Zugang von Maschinen wie Lastwagen oder Wagen auf das Gitter (10) zu verhindern.

7. Grube nach einem der Ansprüche 1 bis 4, dadurch gekennzeichnet, daß das Gitter (10') unabhängig von dem Bunker (1) befestigt ist.

8. Schüttgutspeicheranlage, die eine Grube nach einem der Ansprüche 1 bis 7 aufweist, dadurch gekennzeichnet, daß am Ausgang des Bunkers (1) Fördereinrichtungen (3; 4; 5; 52-60-61, 51-55-57) angeordnet sind, die dazu eingerichtet sind, das Gut selektiv entweder Speicherbehältern (7) oder einem Aufnahmefahrzeug (C3) zuzuführen.

9. Anlage nach Anspruch 8, dadurch gekennzeichnet, daß die Transporteinrichtungen einen Vertikalaufzug (4) enthalten, von wo das Gut durch Schwerkraft durch Rohre (52, 52-55-57) gegen die Speicherbehälter (7) oder gegen das Aufnahmenfahrzeug (C3) absteigen kann.

10. Anlage nach Anspruch 9, dadurch gekennzeichnet, daß eine zusätzliche Leitung (54) zum Rückführen des Gutes in die Grube vorgesehen ist.

**Claims**

1. Receiving and dispatch pit for bulk products, in which there is housed a receiving hopper (1) arranged below a grille (10), characterized in that this hopper (1) is provided with mixing means (8), and in that it rests on weight sensors (9).

2. Pit according to Claim 1, characterized in that the said mixing means (8) comprise an Archimedes screw (81) arranged vertically along the axis (ZZ') of the hopper (1) and housed in a stationary tube (80) which goes down as far as the outlet zone (12) of the hopper, the top part of the Archimedes screw (81) emerging from this tube (80).

3. Pit according to Claim 2, characterized in that the hopper (1) has at least one annular deflector (14, 15) of inverted V-shaped section, arranged around the tube (80).

4. Pit according to one of Claims 2 or 3, characterized in that the Archimedes screw (81) is driven in rotation at its top part by means of an electric motor (86) fixed to the outside of the hopper (1), by way of a transmission (88) which is housed in a horizontal hollow beam (17) mounted inside the hopper (1).

5. Pit according to one of Claims 1 to 4, characterized in that the said grille (10) is supported by the hopper (1).

6. Pit according to Claim 5, characterized in that it comprises a wall (M) arranged all round the pit to prevent access to the grille (10) by equipment such as lorries or wagons.

7. Pit according to one of Claims 1 to 4, characterized in that the said grille (10') is stationary and is independent of the hopper (1).

8. Storage plant for bulk products, which comprises a pit according to one of Claims 1 to 7, characterized in that there are provided at the outlet of the hopper (1) conveying means (3; 4; 5; 52-60-61, 51-55-57) which are adapted to transport the product selectively, either to storage bins (7) or to a receiving vehicle (C3).

9. Plant according to Claim 8, characterized in that the said transporting means comprise a vertical elevator (4) from which the product may come down by gravity through conduits (52, 52-55-57) to the storage bins (7) or to the receiving vehicle (C3).

10. Plant according to Claim 9, characterized in that an additional conduit (54) is provided for returning the product to the pit.

FIG_1

EP 0 389 394 B1

FIG.2A

FIG.2

## FIG_3

## FIG_4

## FIG_5